(19) Europäisches Patentamt
European Patent Office
Office européen des brevets

(11) **EP 2 581 970 A1**

(12) **EUROPEAN PATENT APPLICATION**
published in accordance with Art. 153(4) EPC

(43) Date of publication:
    **17.04.2013 Bulletin 2013/16**

(51) Int Cl.:
    **H01M 4/48** (2010.01)     **H01G 9/058** (0000.00)
    **H01M 4/36** (2006.01)

(21) Application number: **11795367.9**

(22) Date of filing: **03.06.2011**

(86) International application number:
    **PCT/JP2011/003141**

(87) International publication number:
    **WO 2011/158459 (22.12.2011 Gazette 2011/51)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**

(30) Priority: **14.06.2010   JP 2010135395**

(71) Applicant: **OSAKA Titanium Technologies Co.,
    Ltd.
    Amagasaki-shi, Hyogo 660-8533 (JP)**

(72) Inventors:
    • **YASUDA, Kouji
      Amagasaki-shi
      Hyogo 660-8533 (JP)**

    • **KIZAKI, Shingo
      Amagasaki-shi
      Hyogo 660-8533 (JP)**
    • **SHIMOSAKI, Shinji
      Amagasaki-shi
      Hyogo 660-8533 (JP)**

(74) Representative: **Simons, Amanda Louise
    J A Kemp
    14 South Square
    Gray's Inn
    London WC1R 5JJ (GB)**

(54) **POWDER FOR LITHIUM ION SECONDARY BATTERY NEGATIVE ELECTRODE MATERIAL,
LITHIUM ION SECONDARY BATTERY NEGATIVE ELECTRODE, CAPACITOR NEGATIVE
ELECTRODE, LITHIUM ION SECONDARY BATTERY, AND CAPACITOR**

(57) Provided is a negative-electrode material powder used for a lithium-ion secondary battery having a large discharge capacity and sufficient cycle characteristics as being durable in use. The powder for the battery includes a conductive carbon film on a lower silicon oxide powder, surface and satisfies requirements that: Si in SiC is 15.1 wt% or less in content, or A3 (=A2-A1) is 15.1 or less, given A1 (wt%): Si content measured by acid solution process, and A2 (wt%): Si content measured by alkali solution process; and a specific resistance is 30,000 $\Omega$cm or less. In the lower silicon oxide powder, a maximum value P1 of $SiO_x$-derived halos appearing at $2\theta=10°$ to $30°$ and a value P2 of the strongest line peak of Si (111) appearing at $2\theta=28.4\pm0.3°$, in XRD using CuK$\alpha$ beam, preferably satisfy P2/P1<0.01. The content of tar component is preferably 1 ppm or more and 4,000 ppm or less.

FIG. 1

EP 2 581 970 A1

**Description**

TECHNICAL FIELD

The present invention relates to a negative-electrode material powder for lithium-ion secondary battery, which can be used to obtain a lithium ion secondary battery that has a large discharge capacity and sufficient cycle characteristics as being durable in practical use, a negative electrode for lithium-ion secondary battery using said negative-electrode material powder, and a negative electrode for capacitor using said negative-electrode material powder, as well as a lithium-ion secondary battery using the negative electrode for lithium-ion secondary battery and a capacitor using the negative electrode for capacitor.

BACKGROUND ART

In accordance with recent noticeable developments in portable electronic equipments, communication equipments and the like, the development of secondary batteries with high energy density is strongly required from the viewpoint of the economic efficiency and reduction in size and weight of equipment. Currently available secondary batteries with high energy density include a nickel-cadmium battery, a nickel hydrogen-battery, a lithium-ion secondary battery, a polymer battery and the like. Among these batteries, the demand for the lithium-ion secondary battery is strongly growing in the power source market due to its dramatically enhanced life and capacity, compared with the nickel-cadmium battery or nickel-hydrogen battery.

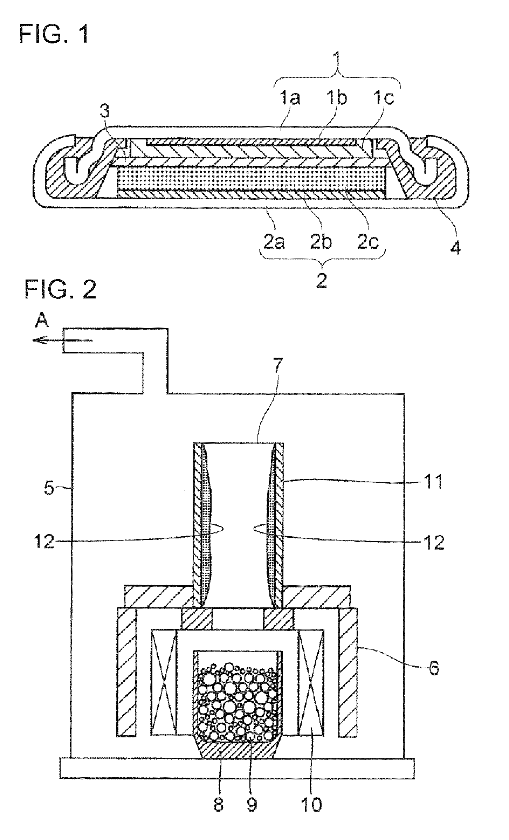

Fig. 1 is a view showing a configuration example of a coin-shaped lithium-ion secondary battery. The lithium-ion secondary battery includes, as shown in Fig. 1, a positive electrode 1, a negative electrode 2, a separator 3 impregnated with electrolyte, and a gasket 4 which seals the battery content while maintaining the electric insulation between the positive electrode 1 and the negative electrode 2. When charging and discharging are performed, lithium ions reciprocate between the positive electrode 1 and the negative electrode 2 through the electrolyte of the separator 3.

The positive electrode 1 includes a counter electrode case 1a, a counter electrode current collector 1b and a counter electrode 1c, and lithium cobaltate ($LiCoO_2$) or manganese spinel ($LiMn_2O_4$) is mainly used for the counter electrode 1c. The negative electrode 2 includes a working electrode case 2a, a working electrode current collector 2b and a working electrode 2c, and a negative-electrode material used for the working electrode 2c generally includes an active material capable of occluding and releasing lithium ions (negative electrode active material), a conductive auxiliary agent, and a binder.

As the negative electrode active material for lithium-ion secondary battery, conventionally, a composite oxide of lithium and boron, a composite oxide of lithium and transition metal (V, Fe, Cr, Mo, Ni, etc.), a compound including N and O as well as Si, Ge or Sn, Si particle the surface of which is coated with a carbon layer by chemical vapor deposition, and the like are proposed.

However, while each of these negative electrode active materials can improve the charge and discharge capacities to enhance the energy density, it significantly deteriorates since dendrite or a passivated compound is generated on the electrode according to repeated charging and discharging, or enhances the expansion or contraction thereof during occlusion and release of lithium ions. Therefore, lithium-ion secondary batteries using these negative electrode active materials are insufficient in the maintainability of discharge capacity by repeated charging and discharging (hereinafter referred to as "cycle characteristics").

On the other hand, it is conventionally attempted to use powders of $SiO_x$ ($0<x\leq2$), collectively designated by silicon oxide, such as SiO, as the negative electrode active material. The silicon oxide can be a negative electrode active material with larger effective charge and discharge capacities, since it is low (less noble) in the electrode potential to lithium and can reversibly occlude and release lithium ions without deterioration during charging and discharging such as the breakup of a crystal structure by the occlusion and release of lithium ions or generation of an irreversible substance. Therefore, the silicon oxide can be used as the negative electrode active material to obtain a lithium-ion secondary battery which is higher in capacity than in a case using carbon and is more satisfactory in cycle characteristics than in a case using a high-capacity negative-electrode material such as Si or Sn alloy.

When the silicon oxide powder is used as the negative electrode active material, in general, carbon powder or the like is mixed thereto as a conductive auxiliary agent for compensating the low electric conductance of the silicon oxide. This makes it possible to ensure the electric conductivity in the vicinity of a contact portion of the silicon oxide powder and the conductive auxiliary agent. However, in a portion away from the contact portion, the silicon oxide powder is less likely to function as the negative electrode active material since the electric conductivity cannot be secured.

In order to solve this problem, there is proposed in Patent Literature 1 a conductive silicon composite for nonaqueous electrolyte secondary battery negative-electrode material including a film of carbon formed on the surface of a particle having a structure in which microcrystals of silicon are dispersed in silicon dioxide (conductive silicon composite), and a method for producing the same.

CITATION LIST

PATENT LITERATURE

PATENT LITERATURE 1: Japanese Patent No. 3952180

SUMMARY OF INVENTION

TECHNICAL PROBLEM

According to the method proposed in Patent Literature 1, a uniform carbon film is formed on the conductive silicon composite to thereby impart sufficient electric conductivity. However, according to the present inventors' examinations, a lithium-ion secondary battery using the conductive silicon composite of Patent Literature 1 had a problem such that since the silicon dioxide with microcrystals of silicon dispersed therein is used as the negative-electrode material, the expansion and contraction are enhanced in the adsorption and desorption of lithium ions during charging and discharging, causing a sudden drop of capacity at a certain point of time when the charging and discharging are repeated. Further, the lithium-ion secondary battery was not sufficient in discharge capacity and cycle characteristics.

In view of this problem, the present invention has an object to provide a negative-electrode material powder for a lithium-ion secondary battery which has a large discharge capacity and sufficient cycle characteristics as being durable in practical use, a negative electrode for lithium-ion secondary battery using the negative-electrode material powder and a negative electrode for capacitor using the negative-electrode material powder, and a lithium-ion secondary battery using the negative electrode for lithium-ion secondary battery and a capacitor using the negative electrode for capacitor.

SOLUTION TO PROBLEM

The present inventors' examinations revealed that when silicon oxide ($SiO_x$) is used as the negative-electrode material powder, and x=1, the lithium-ion secondary battery theoretically has characteristics of reversible capacity of 2,007 mAh/g and initial efficiency of 76%. Since the reversible capacity was less than or comparable to about 1,500 mAh/g in conventional lithium-ion secondary batteries using silicon oxide as the negative-electrode material powder, there is still room for improvement with respect to the reversible capacity of the lithium-ion secondary batteries using silicon oxide as the negative-electrode material powder.

The present inventors further made investigation into the cause of the capacity degradation in the lithium-ion secondary batteries, in regards to silicon oxide-based materials used as the negative-electrode material powder, particularly, silicon oxide with a carbon film formed thereon, which can increase the capacity of lithium-ion secondary battery and relatively enhance the initial efficiency and cycle characteristics thereof.

In this investigation, carbon-film forming treatments under various conditions were performed on silicon oxides having the same composition and the same average particle size, and the initial capacity was measured on a lithium-ion secondary battery using each resultant silicon oxide as the negative-electrode material powder. Further, the Si content was measured by acid solution process on each of the silicon oxides subjected to the carbon-film forming treatment.

As a result, it was found that the Si content is differed depending on the conditions of the carbon-film forming treatments, irrespective of using silicon oxides of the same condition, and the Si content has a correlation with the initial capacity of lithium-ion secondary battery in which the smaller the Si content, the smaller the initial capacity.

The present inventors thought that since the Si content dedicated to SiC cannot be measured by the acid solution process, this difference of Si content is attributed to SiC produced by reaction of the silicon oxide in the vicinity of the surface with C adhered as the film during the carbon-film forming treatment.

Therefore, by use of alkali solution process which is used as a method for measuring Si content including the Si content dedicated to SiC, the measurement of Si content was performed on each of the above-mentioned silicon oxides subjected to the carbon-film forming treatment. As a result, the difference was almost constant within an error range. This shows that SiC was produced in the vicinity of the boundary between the silicon oxide and the carbon film.

Furthermore, it was found that the Si content of a silicon oxide powder subjected to the carbon-film forming treatment has a correlation with the capacity of a lithium-ion secondary battery using this silicon oxide powder as the negative-electrode material powder in which the smaller A3 (=A2-A1), the larger the capacity of the lithium-ion secondary battery, wherein A1 (wt%) is an Si content of the silicon oxide powder measured by acid solution process, and A2 (wt%) is an Si content thereof measured by alkali solution process. The reason of this correlation is that the Si which has constituted the silicon oxide becomes less able to contribute to the capacity of the lithium-ion secondary battery due to the production of SiC, and an SiC layer being formed disturbs the penetration and diffusion of lithium ions to the silicon oxide. The alkali solution process and the acid solution process will be described later.

It was also found that when A3>15.1, or the content of Si changed to SiC in a silicon oxide powder with carbon film is larger than 15.1 wt%, a lithium-ion secondary battery using this silicon oxide powder as the negative-electrode material powder is small in capacity and impracticable.

The present invention is achieved based on the above findings, and the summaries thereof are negative-electrode material powders for lithium-ion secondary of the following (1) to (3), a negative electrode for lithium-ion secondary battery of the following (4), a negative electrode for capacitor of the following (5), a lithium-ion secondary battery of the following (6), and a capacitor of the following (7).

(1) A negative-electrode material powder for lithium-ion secondary battery, including a conductive carbon film formed on the surface of a lower silicon oxide powder, wherein Si as being turned to SiC is 15.1 wt% or less in content, and wherein a specific resistance is 30,000 $\Omega$cm or less.

(2) A negative-electrode material powder for lithium-ion secondary battery, including a conductive carbon film formed on the surface of a lower silicon oxide powder, wherein A3 (=A2-A1) is 15.1 or less, given that A1 (wt%) is an Si content measured by acid solution process, and A2 (wt%) is an Si content measured by alkali solution process, and wherein a specific resistance is 30,000 $\Omega$cm or less.

(3) The negative-electrode material powder for lithium-ion secondary battery according to (1) or (2), wherein the total content of tar component based on measurement by TPD-MS is not less than 1 ppm by mass and not more than 4,000 ppm by mass.

(4) The negative-electrode material powder for lithium-ion secondary battery according to any one of (1) to (3), wherein a maximum value P1 of $SiO_x$-derived halos which appear at $2\theta=10°$ to $30°$ and a value P2 of the strongest line peak of Si (111) which appears at $2\theta=28.4\pm0.3°$, in measurement by XRD using CuK$\alpha$ beam, satisfy a relationship of P2/P1<0.01.

(5) A negative electrode for lithium-ion secondary battery, using the negative-electrode material powder for lithium-ion secondary battery according to any one of (1) to (4).

(6) A negative electrode for capacitor, using the negative-electrode material powder for lithium-ion secondary battery according to any one of (1) to (4).

(7) A lithium-ion secondary battery, using the negative electrode for lithium-ion secondary battery according to (5).

(8) A capacitor, using the negative electrode for capacitor according to (6).

In the present invention, the "lower silicon oxide powder" means a powder of $SiO_x$ which satisfies $0.4\leq x\leq1.2$. The method for determining the x of $SiO_x$ and the method for measuring the content of tar component will be described later.

With respect to the lower silicon oxide powder, the term "including a conductive carbon film formed on the surface" indicates that the value of mole ratio Si/C of Si to C based on surface analysis using an X-ray photoelectron spectrometer is 0.02 or less, namely means a state such that most of the surface of the lower silicon oxide powder is covered with C, ending up in almost no exposure of Si.

The "acid solution process" is a measurement method of Si content which is performed using an acid to detect Si included in silicon oxide and Si constituting SiO and $SiO_x$, and the "alkali solution process" is a measurement method of Si content which is performed using an alkali to detect Si included in silicon oxide and Si constituting SiO, $SiO_x$ and SiC.

ADVANTAGEOUS EFFECTS OF INVENTION

The negative-electrode material powder for lithium-ion secondary battery and the negative electrode for lithium-ion secondary battery or negative electrode for capacitor of the present invention can be used to obtain a lithium-ion secondary battery and a capacitor which has a large discharge capacity and sufficient cycle characteristics as being durable in practical use. The lithium-ion secondary battery and capacitor of the present invention are large in discharge capacity and exhibit sufficient cycle characteristics.

BRIEF DESCRIPTION OF DRAWINGS

[Fig. 1] Fig. 1 is a view showing a configuration example of a coin-shaped lithium-ion secondary battery.
[Fig. 2] Fig. 2 is a view showing a configuration example of a production unit for silicon oxide.

DESCRIPTION OF EMBODIMENTS

1. Negative-Electrode Material Powder for Lithium-Ion Secondary Battery of Invention

A negative-electrode material powder for lithium-ion secondary battery of the present invention includes a conductive carbon film formed on the surface of a lower silicon oxide powder, wherein the content of Si changed to SiC is 15.1 wt% or less, namely A3 (=A2-A1) is 15.1 or less, given that A1 (wt%) is an Si content measured by acid solution process, and A2 (wt%) is an Si content measured by alkali solution process.

The lower silicon oxide powder is, as described above, $SiO_x$ which satisfies $0.4 \leq x \leq 1.2$. When the value of x is below 0.4, the deterioration associated with charging and discharging cycles of a lithium-ion secondary battery and capacitor using the negative-electrode material powder of the present invention becomes serious, and when the value exceeds 1.2, the capacity of the battery is reduced. Preferably, x satisfies $0.8 \leq x \leq 1.05$.

In the negative-electrode material powder for lithium-ion secondary battery of the present invention, the total content of tar component is preferably set to not less than 1 ppm by mass and not more than 4,000 ppm by mass. The tar component is produced when the conductive carbon film is formed as described later. When the total content of tar component is higher than 4,000 ppm by mass, a resultant lithium-ion secondary battery is insufficient in the resistance to expansion and contraction of negative electrode associated with charging and discharging, and inferior in cycle characteristics. On the other hand, when the total content is 4,000 ppm by mass or less, a lithium-ion secondary battery sufficient in initial efficiency and cycle characteristics can be obtained, and the cycle characteristics are particularly enhanced. The initial efficiency and cycle characteristics are further enhanced at 1,500 ppm by mass or less. On the other hand, reduction of the total content of tar component to 1 ppm or less requires prolonged vacuum treatment of the negative-electrode material powder for lithium-ion secondary battery and thus leads to an increase in manufacturing cost. Therefore, it is more preferable to set the total content of tar component to not less than 40 ppm by mass and not more than 1,500 ppm by mass.

In the negative-electrode material powder for lithium-ion secondary battery of the present invention, it is preferred that a maximum value P1 of $SiO_x$-derived halos which appear at $10° \leq 2\theta \leq 30°$ and a value P2 of the strongest line peak of Si (111) which appears at $2\theta = 28.4 \pm 0.3°$ in measurement by an X-ray refraction device (XRD) using $CuK\alpha$ beam satisfy a relationship of P2/P1<0.01, namely that the negative-electrode material powder is amorphous. This is because the lower silicon oxide powder in the negative-electrode material powder for lithium ion secondary batteries is preferably amorphous.

The average particle size of the negative-electrode material powder for lithium-ion secondary battery is preferably not less than 1 $\mu$m and not more than 15 $\mu$m, more preferably not less than 3 $\mu$m and not more than 12 $\mu$m. When the average particle size is too small, the charge and discharge capacities per unit volume are reduced due to excessively reduced bulk density. On the other hand, when the average particle size is too large, the preparation of an electrode film constituting the working electrode 2c shown in Fig. 1 becomes difficult, and the detachment of the powder from a current collector can be caused. The average particle size is a value measured as a weight average value $D_{50}$ (a particle size when the cumulative weight is 50% of the total weight or a median diameter) in particle-size distribution measurement by laser diffractometry.

The specific resistance of the negative-electrode material powder for lithium-ion secondary battery is preferably not more than 30,000 $\Omega$cm. When the specific resistance is larger than 30,000 $\Omega$cm, it hardly acts as the electrode active material for lithium-ion secondary battery. The lower limit of the specific resistance does not particularly have to be provided since the smaller the specific resistance, the more satisfactory the electric conduction, leading up to a suitable state as the electrode active material for lithium-ion secondary battery.

3. Analysis Method

3-1. Evaluation of Formation State of Conductive Carbon Film

In the negative-electrode material powder for lithium-ion secondary battery of the present invention, the term "including a conductive carbon film formed on the surface of a lower silicon oxide powder" means that the mole ratio Si/C of Si to C is 0.02 or less when a lower silicon oxide powder subjected to the forming treatment of the conductive carbon film undergoes surface analysis by an X-ray photoelectron spectrometer (XPS) using $AlK\alpha$ beam (1486.6 eV). The measurement conditions of XPS are shown in Table 1. The "Si/C is 0.02 or less" means a state such that most of the surface of the lower silicon oxide powder is covered with C, ending up in almost no exposure of Si.

[Table 1]

Table 1

| Device | Quantera SXM (by PHI) |
|---|---|
| Excited X-ray | Al K$\alpha$ beam (1486.6 eV) |
| Photoelectron escape angle | 45° |
| Correction of bond energy | C1s main peak is 284.6 eV |
| Electron orbit | C1s, Si2p |

3-2. Measurement of Si Content (Acid Solution Process)

The Si content (A1 (wt%)) in the negative-electrode material powder for lithium-ion secondary battery by acid solution process is quantitatively evaluated by analyzing a solution, obtained by adding nitric acid and fluoric acid to a test sample for dissolving it, by an ICP emission spectrophotometer (made by SHIMADZU). In the acid solution process, Si, SiO and $SiO_2$ are dissolved, and Si constituting them can be detected. However, Si constituting SiC cannot be detected.

3-3. Measurement of Si Content (Alkali Solution Process)

The Si content (A2 (wt%)) in the negative-electrode material powder for lithium-ion secondary battery by alkali solution process is quantitatively evaluated by analyzing a solution by an ICP emission spectrophotometer (made by SHIMADZU), the solution being obtained by adding sodium carbonate and boric acid to a test sample, followed by heating and fusing, and adding nitric acid thereto for dissolving the test sample. In the alkali solution process, Si, SiO, $SiO_2$ and SiC are dissolved, and Si constituting them can be detected. Namely, A2-A1 (=A3) is calculated, whereby the content of SiC and the content of Si changed to SiC in the negative-electrode material powder for lithium-ion secondary battery can be quantitatively evaluated.

3-4. Measurement of O (oxygen) content

The O content in the negative-electrode material powder for lithium-ion secondary battery is quantitatively evaluated by analyzing a test sample 10 mg by inert gas fusion/infrared absorption method by use of an oxygen concentration analyzer (by LECO, TC 436).

3-5. Calculation of x of $SiO_x$

The x of $SiO_x$ is the mole ratio (O/Si) of O content to Si content in the negative-electrode material powder for lithium-ion secondary battery. The calculation of x is performed using values measured by an O content measured by the above-mentioned measurement method and an Si content measured by the above-mentioned acid solution process.

3-6. Measurement of Content of Tar Component by TPD-MS

The residual amount of tar component in the negative-electrode material powder for lithium-ion secondary battery can be measured by the following TPD-MS (Temperature Programmed Desorption-Mass Spectroscopy). A test sample 50 mg is put in a silica-made cell and heated from room temperature to 1,000°C at a rate of 10 K/min in a helium gas flow of 50 mL/min. A gas being generated is analyzed by a mass analyzer (by SHIMADZU, GC/MS QP5050A).
The tar component means a high-molecular-weight component such as aromatic hydrocarbon, which is produced when a gas of hydrocarbon or organic matter is thermally decomposed. In the present invention, the total amount of constituents having molecular weights of 57, 106, 178, 202, 252 and 276 is regarded as the residual amount of tar component (refer to Table 5 to be described). The typical chemical species corresponding to the molecular weight is as follows: xylene for 106, phenanthrene and antracene for 178, pyrene for 202, perylene and benzopyrene for 252, and pentacene and picene for 276.

3-7. Measurement of Specific Resistance

The specific resistance p ($\Omega$cm) of the negative-electrode material powder for lithium-ion secondary battery is calculated using the following equation (2).

$$\rho = R \times A/L \quad ... \quad (2)$$

given by R: electric resistance of sample ($\Omega$), A: bottom area of test sample ($cm^2$), and L: thickness of test sample (cm). The electric resistance of a test sample is measured by a two-terminal method using a digital multimeter (made by IWATSU TEST INSTRUMENTS CORP., VOAC 7513) after filling a powder resistance measuring tool (tool portion: made of stainless with an inside diameter 20 mm, frame portion: made of polytetrafluoroethylene) with the test sample 0.20g, followed by pressurization at 20 kgf/$cm^2$ for 60 seconds. The thickness of the sample is measured using a micrometer.

4. Production of Lower Silicon Oxide Powder

Fig. 2 is a view showing a configuration example of a production unit for silicon oxide. This unit includes a vacuum chamber 5, a raw material chamber 6 disposed inside the vacuum chamber 5, and a precipitation chamber 7 disposed above the raw material chamber 6.

The raw material chamber 6 comprises a cylindrical body, and includes a cylindrical raw material container 8 disposed at a central portion thereof and a heating source 10 disposed to surround the raw material container 8. As the heating source 10, for example, an electric heater can be used.

The precipitation chamber 7 comprises a cylindrical body disposed so that its axis coincides with that of the raw material container 8. The inner periphery of the precipitation chamber 7 is provided with a precipitation substrate 11 made of stainless steel to deposit gaseous silicon oxide generated by sublimation in the raw material chamber 6 thereon.

A vacuum device (not shown) for discharging the atmospheric gas is connected to the vacuum chamber 5 housing the raw material chamber 6 and the precipitation chamber 7 to discharge the gas in the direction of arrow A.

When a lower silicon oxide is produced using the production unit shown in Fig. 2, a mixed granular raw material 9 obtained by blending silicon powder and silicon dioxide powder in a predetermined ratio as raw materials followed by mixing, granulating and drying is used. This mixed granulated raw material 9 is filled in the raw material container 8, and heated by the heating source 10 in an inert gas atmosphere or in vacuum to generate (sublimate) SiO. The gaseous SiO generated by sublimation ascends from the raw material chamber 6 into the precipitation chamber 7, in which it is deposited on the peripheral precipitation substrate 11 and precipitated as a lower silicon oxide 12. Thereafter, the precipitated lower silicon oxide 12 is taken off from the precipitation substrate 11, and pulverized by use of a ball mill or the like, whereby a lower silicon oxide powder is obtained.

5. Formation of Conductive Carbon Film

The formation of a conductive carbon film onto the surface of the lower silicon oxide powder is performed by means of CVD or the like. Concretely, the formation is performed using a rotary kiln as the device, and a mixed gas of hydrocarbon gas or an organic matter-containing gas and inert gas as the pertinent gas.

When organic matter other than hydrocarbon is used as the carbon source, the amount of Si contributable to the occlusion and release of lithium ions is reduced since a component other than C and H, such as O or N, reacts with the silicon oxide to generate $SiO_2$ or $Si_3N_4$, and the capacity of the lithium-ion secondary battery is thus reduced. Therefore, hydrocarbon gas composed of only C and H is preferred as the carbon source. When the hydrocarbon gas is used as the carbon source, aromatic series composed of only C and H are generated as the tar component, with constituents having molecular weights of 57, 106, 178, 202, 252 and 276 being main components.

The treatment temperature for the formation of the conductive carbon film is 750°C. Time of treatment is not less than 20 minutes and not more than 120 minutes, and is set according to the thickness of the conductive carbon film to be formed. This time of treatment is in a range such that no SiC is formed in the vicinity of a boundary between the surface of the lower silicon oxide powder and the carbon film. The conductive carbon film is formed on the lower silicon oxide powder that is an insulator, whereby the discharge capacity of a lithium-ion secondary battery using this lower silicon oxide powder as the negative-electrode material powder can be improved.

6. Vacuum Treatment of Lower Silicon Oxide Powder with Conductive Carbon Film

The lower silicon oxide powder with the thus-formed conductive carbon film is subjected to vacuum treatment, in which the powder is retained at a temperature of not lower than 600°C and not higher than 750 °C for not less than 10 minutes and not more than 1 hour under vacuum. The vacuum treatment is performed with the lower silicon oxide powder being accommodated in a vacuum tank, and the internal pressure of the vacuum tank is maintained at 1 Pa or less by use of an oil diffusion pump. The internal pressure is measured using a Pirani gauge.

The tar component produced during the formation of the carbon film can be volatilized and removed from the carbon film by this vacuum treatment. When the heating and retention temperature is in the above-mentioned range, the generation of SiC in the vicinity of the boundary between the silicon oxide and the carbon film is suppressed.

7. Configuration of Lithium-Ion Secondary Battery

A configuration example of a coin-shaped lithium-ion secondary battery using the negative-electrode material powder for lithium-ion secondary battery and negative electrode for lithium-ion secondary battery of the present invention will be described with reference to Fig. 1. The basic configuration of the lithium-ion secondary battery shown in the same drawing is as described above.

The negative electrode 2, namely the negative-electrode material used for the working electrode 2c constituting the negative electrode for lithium-ion secondary battery of the present invention is constituted using the negative-electrode material powder for lithium-ion secondary battery of the present invention. Concretely, it can include the negative-electrode material powder for lithium-ion secondary battery of the present invention as being one of active material, other active materials, a conductive auxiliary agent and a binder. Among the constituents in the negative-electrode material, the ratio of the negative-electrode material powder for lithium-ion secondary battery of the present invention to the total of the constituents except the binder is set to 20 wt% or more. The active materials other than the negative-electrode material powder for lithium-ion secondary battery of the present invention do not necessarily have to be added. As the conductive auxiliary agent, for example, acetylene black or carbon black can be used, and as the binder, for example, polyacrylic acid (PAA) or polyvinylidene fluoride can be used.

The lithium-ion secondary battery of the present invention has a large discharge capacity and sufficient cycle characteristics as being durable in practical use, since the above-mentioned negative-electrode material powder for lithium-ion secondary battery and negative electrode for lithium-ion secondary battery of the present invention are used.

The negative-electrode material powder of the present invention and the negative electrode using the same can be applied also to a capacitor.

EXAMPLES

For confirming the effects of the present invention, the following test using lithium-ion secondary battery was carried out, and results thereof were evaluated.

1. Test Conditions

1-1. Configuration of Lithium-Ion Secondary Battery

The coin shape shown in Fig. 1 was adopted as the configuration of the lithium-ion secondary battery.

The negative electrode 2 is described first. A mixed granulated raw material is obtained by blending silicon powder and silicon dioxide powder in a predetermined ratio, followed by mixing, granulating and drying, and was used as the raw material. And a lower silicon oxide was precipitated on a precipitation substrate by use of the unit shown in Fig. 2. The precipitated lower silicon oxide was pulverized for 24 hours using an alumina ball mill and converted into a powder with an average particle size of 3 to 12 $\mu$m. This powder of lower silicon oxide ($SiO_x$) satisfied the above-mentioned requirements of the value of P2/P1 measured by XRD being P2/P1<0.01, and $0.8 \leq x \leq 1.05$.

A conductive carbon film was formed on the surface of this lower silicon oxide powder by use of a rotary kiln and hydrocarbon gas. The treatment temperature and treatment time in the formation of the conductive carbon film were set to conditions shown in Table 2. In the column of "film rating" in Table 2, "o" shows that the value of Si/C obtained by the surface analysis using XPS was 0.02 or less, namely that the lower silicon oxide powder had the conductive carbon film, while "×" shows that the value of Si/C was larger than 0.02, namely that the lower silicon oxide powder had no conductive carbon film. Examples of Test Nos. 2-4 shown in Table 2 are inventive examples in which the lower silicon oxide powder has the conductive carbon film, and the value of A3 satisfies the conditions of the negative-electrode material powder for lithium-ion secondary battery specified in the present invention. A3 is a difference (A2-A1) between an Si content A2 (wt%) measured by alkali solution process and an Si content A1 (wt%) measured by acid solution process. Examples of Test Nos. 1, 5 and 6 are comparative examples in which at least one of the conductive carbon films and the value of A3 does not satisfy the conditions of the negative-electrode material powder for lithium-ion secondary battery specified in the present invention.

[Table 2]

Table 2

| Test No. | Classification | Treatment Temperature of Film Formation (°C) | Treatment Time of Film Formation (min) | A3 | Film Rating | Specific Resistance ($\Omega$cm) | Initial Discharge Capacity (mAh/g) | Sustainability Rate of Cycle Capacity (%) |
|---|---|---|---|---|---|---|---|---|
| 1 | Comparative Example | 750 | 10 | 0.9 | × | 124000 | 1105 | 45.6 |
| 2 | Inventive Example | 750 | 20 | 2.6 | ○ | 29600 | 1898 | 94.5 |
| 3 | Inventive Example | 750 | 40 | 5.0 | ○ | 960 | 1862 | 95.6 |
| 4 | Inventive Example | 750 | 100 | 15.1 | ○ | 84 | 1803 | 93.8 |
| 5 | Comparative Example | 750 | 150 | 19.2 | ○ | 36 | 1336 | 60.5 |
| 6 | Comparative Example | 900 | 60 | 20.5 | ○ | 32 | 1468 | 75.3 |

In Examples of Test Nos. 7 and 8 shown in Table 3, the vacuum treatment was performed after forming the conductive carbon film in the same condition as Test No. 1. Both Test Nos. 7 and 8 are inventive examples in which the lower silicon oxide powder has the conductive carbon film, and the value of A3 satisfies the condition for the negative-electrode material powder for lithium-ion secondary battery specified in the present invention. In Table 3, Test No. 2 is also described for comparison.

[Table 3]

Table 3

| Test No. | Classification | Temp. of Vacuum Treatment (°C) | Time of Vacuum Treatment (min) | A3 | Film Rating | Amount of Tar (ppmw) | Specific Resistance (Ωcm) | Initial Discharge Capacity (mAh/g) | Sustainability Rate of Cycle Capacity (%) |
|---|---|---|---|---|---|---|---|---|---|
| 2 | Inventive Example | - | - | 2.6 | ○ | 4630 | 29600 | 1898 | 94.5 |
| 7 | Inventive Example | 750 | 20 | 2.6 | ○ | 1820 | 2600 | 1910 | 95.2 |
| 8 | Inventive Example | 750 | 40 | 2.6 | ○ | 693 | 840 | 1921 | 95.9 |

A slurry was prepared by adding n-methylpyrrolidone to a mixture composed of 65 wt% of the lower silicon oxide powder subjected to the forming treatment of conductive carbon film, 10 wt% of acetylene black and 25 wt% of PAA. The slurry was coated on a copper foil 20 $\mu$m in thickness, and the resultant foil was dried for 30 minutes in an atmosphere of 120°C, and then punched into a size having an area of 1 cm$^2$ per face, whereby the negative electrode 2 was formed.

The counter electrode 1c was made of lithium foil. As the electrolyte, used is a solution in which LIPF$_6$ (lithium hexafluorophosphate) was dissolved to a mixture of EC (ethylene carbonate) and DEC (diethyl carbonate) with a volume ratio of 1:1 1 so as to have a ratio of 1 mol/L. As the separator, a polyethylene porous film 30 $\mu$m in thickness was used.

1-2. Conditions of Charging and discharging Test

A secondary battery charging and discharging test device (by NAGANO) was used for the charging and discharging test. Charging was performed with a constant current of 1 mA until the voltage between both electrodes of the lithium-ion secondary battery reaches 0 V, and after the voltage reached 0 V, the charging was continued while maintaining 0 V. Thereafter, the charging was terminated when the current value fell below 20 $\mu$A. Discharging was performed with a constant current of 1 mA until the voltage between both the electrodes of the lithium-ion secondary battery reached 1.5 V. Ten cycles of the above-mentioned charging and discharging were carried out as the test.

2. Test Result

Lithium-ion secondary batteries produced in the above-mentioned conditions were subjected to the charging and discharging test, and evaluated with the initial discharge capacity and the sustainability rate of cycle capacity as evaluation indexes. These values are shown in Tables 2 and 3 together with the test conditions. The sustainability rate of cycle capacity is a value obtained by dividing the discharge capacity in the 10-th cycle by the initial discharge capacity, and a larger value of the rate indicates more satisfactory cycle characteristics. With respect to lower silicon oxide powders subjected to the forming treatment of conductive carbon film, the specific resistance was measured, and regarding Test Nos. 2, 7 and 8, the total content of tar component was also measured. The measured values thereof are also shown in Table 3.

In Test No. 1 that is a comparative example, the formation of SiC in the boundary vicinity between the lower silicon oxide powder and the carbon film was less due to a short treatment time of carbon film formation, and the value of A3 was 0.9 within the specified range of the present invention. However, the film rating was × due to insufficient formation of the carbon film, and the specific resistance was as large as 124,000 Ωcm. Therefore, both the initial discharge capacity and the sustainability rate of cycle capacity were inferior, compared with the inventive examples.

In Test Nos. 5 and 6 which are comparative examples, the film rating was ○ with sufficient formation of the carbon film. However, a large amount of SiC was formed in the boundary vicinity between the lower silicon oxide powder and the carbon film due to a treatment time as long as 150 minutes in Test No. 5 and due to a treatment temperature as high as 900 °C in Test No. 6 with A3 being 19.2 or 20.5 beyond the specified range of the present invention. Therefore, the specific resistance was as low as 36 Ωcm or 32 Ωcm and inferior, compared with the inventive examples, although the initial discharge capacity and the sustainability rate of cycle capacity were more satisfactory than in Test No. 1.

In each of Test Nos. 2 to 4, 7 and 8 which are inventive examples, the film rating was ○, with A3 being 2.6 to 15.1 and the specific resistance being 84 to 29,600 Ωcm without departing from the specified ranges of the present invention. Further, the initial discharge capacity and the sustainability rate of cycle capacity exhibited excellent values of 1,800 mAh/g or more and 93% or more respectively. According to the results of Test Nos. 2, 7 and 8 shown in Table 3, the longer the vacuum treatment time, the lower the total content of tar component, and the lower the total content of tar component, the higher the initial discharge capacity and the sustainability rate of cycle capacity. The total content of tar component was 4,000 ppm by mass or less in Test No.7, and 1,500 ppm by mass or less in Test No. 8.

INDUSTRIAL APPLICABILITY

The negative-electrode material powder for lithium-ion secondary battery and the negative electrode for lithium-ion secondary battery or negative electrode for capacitor of the present invention can be used to obtain a lithium-ion secondary battery and a capacitor which has a large discharge capacity and sufficient cycle characteristics as being durable in practical use. The lithium-ion secondary battery and capacitor of the present invention are large in discharge capacity and exhibit sufficient cycle characteristics. Accordingly, the present invention is a useful technique in the field of secondary batteries and capacitors.

REFERENCE SIGNS LIST

1:       Positive electrode
1a:      Counter electrode case
1b:      Counter electrode current collector
1c:      Counter electrode
2:       Negative electrode
2a:      Working electrode case
2b:      Working electrode current collector
2c:      Working electrode
3:       Separator
4:       Gasket
5.       Vacuum chamber
6:       Raw material chamber
7:       Precipitation chamber
8:       Raw material container
9:       Mixed granulated raw material
10:      Heating source
11:      Precipitation substrate
12:      Lower silicon oxide

**Claims**

1.  A negative-electrode material powder for lithium-ion secondary battery, including a conductive carbon film formed on the surface of a lower silicon oxide powder, **characterized in that**
    Si as being turned to SiC is 15.1 wt% or less in content; and
    a specific resistance is 30,000 $\Omega$cm or less.

2.  A negative-electrode material powder for lithium-ion secondary battery, including a conductive carbon film formed on the surface of a lower silicon oxide powder, **characterized in that**
    A3 (=A2-A1) is 15.1 or less, given that A1 (wt%) is an Si content measured by acid solution process, and A2 (wt%) is an Si content measured by alkali solution process; and
    a specific resistance is 30,000 $\Omega$cm or less.

3.  The negative-electrode material powder for lithium-ion secondary battery according to claim 1 or 2, **characterized in that** the total content of tar component based on measurement by TPD-MS is not less than 1 ppm by mass and not more than 4,000 ppm by mass.

4.  The negative-electrode material powder for lithium-ion secondary battery according to any one of claims 1 to 3, **characterized in that** a maximum value P1 of $SiO_x$-derived halos which appear at $2\theta=10°$ to $30°$ and a value P2 of the strongest line peak of Si (111) which appears at $2\theta=28.4\pm0.3°$, in measurement by XRD using CuK$\alpha$ beam, satisfy a relationship of P2/P1<0.01.

5.  A negative electrode for lithium-ion secondary battery, **characterized by** using the negative-electrode material powder for lithium-ion secondary battery according to any one of claims 1 to 4.

6.  A negative electrode for capacitor, **characterized by** using the negative-electrode material powder for lithium-ion secondary battery according to any one of claims 1 to 4.

7.  A lithium-ion secondary battery, **characterized by** using the negative electrode for lithium-ion secondary battery according to claim 5.

8.  A capacitor, **characterized by** using the negative electrode for capacitor according to claim 6.

FIG. 1

FIG. 2

## INTERNATIONAL SEARCH REPORT

| | International application No. |
|---|---|
| | PCT/JP2011/003141 |

A.  CLASSIFICATION OF SUBJECT MATTER
*H01M4/48*(2010.01)i, *H01G9/058*(2006.01)i, *H01M4/36*(2006.01)i

According to International Patent Classification (IPC) or to both national classification and IPC

B.  FIELDS SEARCHED

Minimum documentation searched (classification system followed by classification symbols)
H01M4/48, H01G9/058, H01M4/36

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus/JST7580(JDreamII)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2004-63433 A  (Shin-Etsu Chemical Co.,<br>Ltd.),<br>26 February 2004 (26.02.2004),<br>claims 1, 7, 8; paragraphs [0008], [0012] to<br>[0018], [0031] to [0033], [0041]<br>& US 2003/0118905 A1    & EP 1323783 A2 | 1,2,4,5,7<br>6,8<br>3 |
| Y | JP 2010-40231 A  (Shin-Etsu Chemical Co.,<br>Ltd.),<br>18 February 2010 (18.02.2010),<br>claims 1, 3, 9, 10<br>(Family: none) | 6,8 |
| A | JP 2008-198610 A  (Samsung SDI Co., Ltd.),<br>28 August 2008 (28.08.2008),<br>entire text<br>& US 2008/0193831 A1 | 1-8 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 August, 2011 (26.08.11) | 06 September, 2011 (06.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/003141

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2007-329001 A  (Matsushita Electric Industrial Co., Ltd.), 20 December 2007 (20.12.2007), paragraph [0017] (Family: none) | 1-8 |
| A | JP 2006-244984 A  (Matsushita Electric Industrial Co., Ltd.), 14 September 2006 (14.09.2006), paragraphs [0073], [0115] & US 2008/0160409 A1 | 1-8 |
| A | JP 2005-149957 A  (Japan Storage Battery Co., Ltd.), 09 June 2005 (09.06.2005), entire text (Family: none) | 1-8 |

Form PCT/ISA/210 (continuation of second sheet) (July 2009)

**EP 2 581 970 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3952180 B